# EUROPEAN PATENT APPLICATION

(11) **EP 3 637 386 A1**
(43) Date of publication of application: **15.04.2020**
(21) Application number: 18306348.6
(22) Date of filing: 12.10.2018
(51) Int. Cl.: G08G 5/00, G06F 17/15, B64D 45/00, G06N 3/04, G06N 20/00

(54) **MACHINE LEARNING ON BIG DATA IN AVIONICS**

(71) Applicant: Thales, 92400 Courbevoie (FR)
(72) Inventor: DE MUNCK, Wim, 3500 Hasselt Belgium (BE); LEJEUNE, Jonas, 3500 Hasselt Belgium (BE)
(74) Representative: Hnich-Gasri, Naïma

(57) **Abstract**

There is disclosed a method for handling aircraft data, comprising the steps of receiving an input aircraft model and/or operational data; comparing said model and/or data with reference data previously obtained by machine learning performed on large collections of data of recorded flights, wherein said reference data defines safe boundaries for one or more aircraft models and/or operations data. Developments describe "big data" aspects, comprising aircraft or flight data of a plurality of airlines about a plurality of aircraft, engines, flight contexts, aircraft configurations and meteorological data ; the handling of calculations about performances, weight and balance, fuel, crew duty times; etc., the use of machine deep learning (unsupervised pre-training); comparisons against a superset of data generated out from the collected large collections of data, with or without human intervention; automated validation tests of aircraft models and associated data. Hardware and software aspects are described.

## Description

### Technical Field

This patent relates to the field of digital data processing and more particularly to applications of data processing to the specific field of avionics.

### Background

Aircraft are highly complex systems influenced by many (external and internal) factors. When offering a set of calculation results to pilots, these results need to be "*validated*" to ensure they do not violate official documentation or regulatory rules. Validating all possible calculations is nearly impossible due to the large amount of possible input combinations.

Coupled with the ever increasing capacity of collecting very large amounts of data (sometimes called "Big Data"), *machine learning* is transforming many industrial fields. Falling hardware prices, the development of GPUs for personal use in the last few years have contributed to the development of the concept of deep learning which consists of multiple layers in an artificial neural network, trying to model the way the human brain processes information. The number of libraries for implementing machine learning is rapidly increasing (e.g. Python)

In the field of avionics, applications of machine learning to large collections of data are just emerging. The patent literature dealing with "big data" and "machine learning" is scarce but contains some interesting approaches. For example, the patent document US9542851 describes a flight management system which is modified so that it can deal with an unpredicted current event happening to an airplane based on non-standard maneuvers that have been carried out previously by other airplanes in similar circumstances. This allows the flight management system to adaptively or dynamically respond to a variety of flight path changes rather than rely solely on a set of fixed responses to predictable events during a flight. Specifically, the flight management system is configured to provide procedural recommendations to a flight crew in real time based on collaboratively filtered historical data such that the flight crew can make smarter choices while operating airplanes. This approach nevertheless presents limitations

There is a need for advanced methods and systems for managing aircraft data.

### Summary

There is disclosed a method for handling aircraft data, comprising the steps of receiving an input aircraft model and/or operational data; comparing said model and/or data with reference data previously obtained by machine learning performed on large collections of data of recorded flights, wherein said reference data defines safe boundaries for one or more aircraft models and/or operations data. Developments describe "big data" aspects, comprising aircraft or flight data of a plurality of airlines about a plurality of aircraft, engines, flight contexts, aircraft configurations and meteorological data ; the handling of calculations about performances, weight and balance, fuel, crew duty times; etc., the use of machine deep learning (unsupervised pre-training); comparisons against a superset of data generated out from the collected large collections of data, with or without human intervention; automated validation tests of aircraft models and associated data. Hardware and software aspects are described.

Advantageously, embodiments of the invention allow performing validations by using a validated deep-learning A.I. system, instructed on the basis of known or recorded values, parameters (and calculated as well).

Advantageously, embodiments of the invention allow selecting a subset of the calculations which will lead to significant certainty that the implementation follows the official documentation and regulations. The validation process according to the invention is automated, and more complete than existing manual validation methods.

Advantageously, embodiments of the invention allow performing necessary and sufficient validations, in particular by using the (same) calculation engines used by pilots, validating (and visualizing) the outcome.

### Brief description of drawings

Embodiments of the present invention will now be described by way of example with reference to the accompanying drawings in which like references denote similar elements, and in which:
Figure 1 illustrates the architecture of an embodiment of the invention;
Figure 2 illustrates an example of data collection step according to an embodiment of the invention;
Figure 3 illustrates an example of data processing step according to an embodiment of the invention;
Figure 4 illustrates an example of end-user validation via a graphical user interface according to an embodiment of the invention;
Figure 5 illustrates an example of model validation according to an embodiment of the invention;

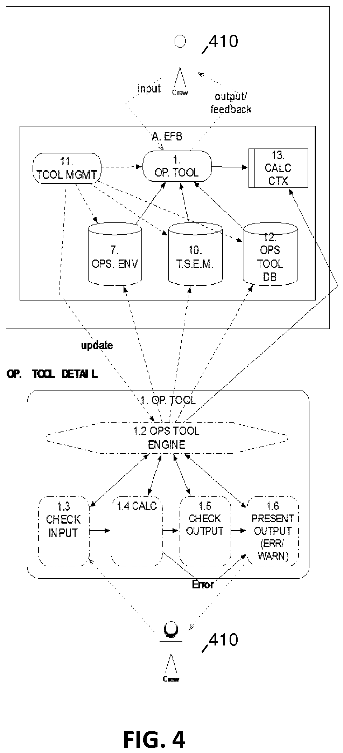

Figure 4 illustrates an example of end-user validation via a graphical user interface according to an embodiment of the invention;

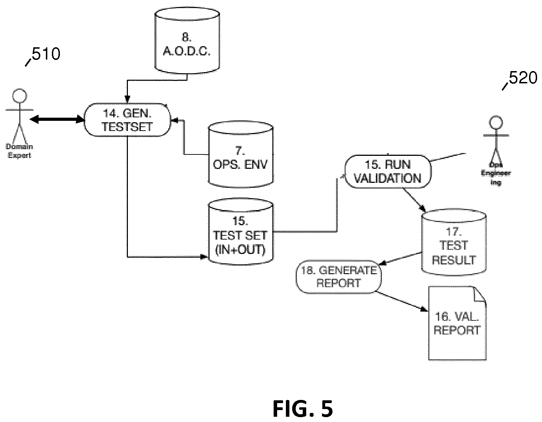

Figure 5 illustrates an example of model validation according to an embodiment of the invention;

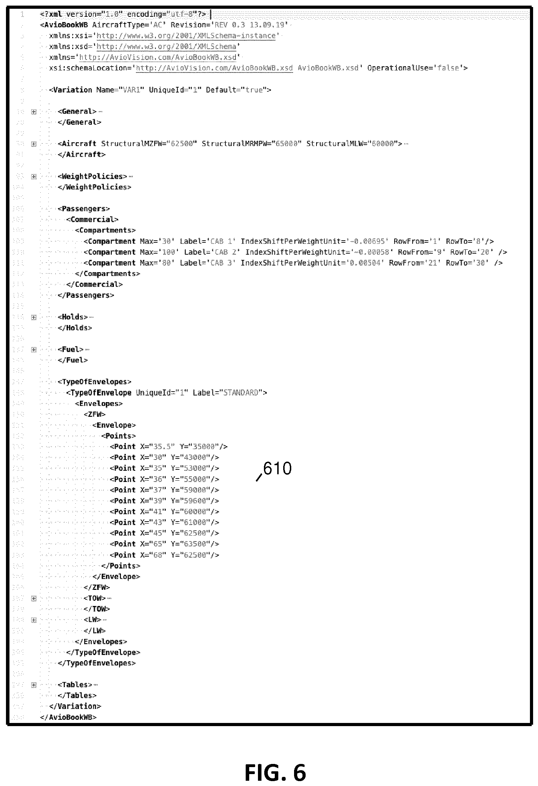

Figure 6 shows an example of a configuration file associated with an aircraft model;

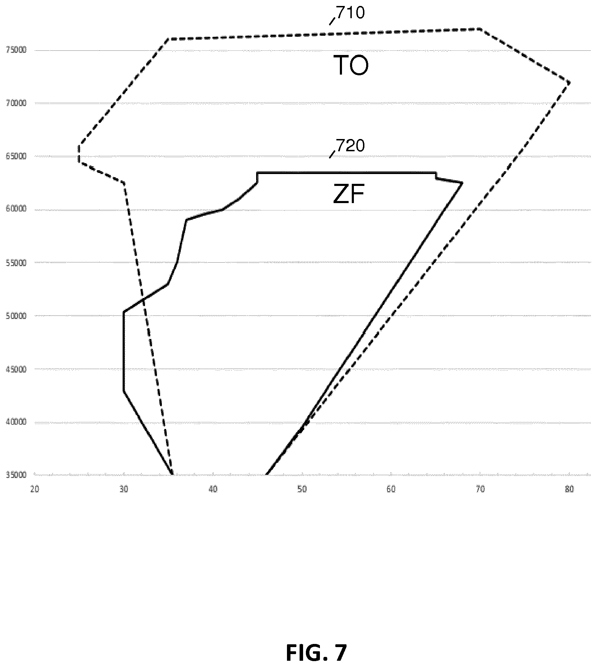

Figure 7 shows schematic examples of envelopes.

### Detailed description

In the aviation industry, some calculations are critical to be able to operate an aircraft or fleet of aircraft. Core calculations comprise: i) aircraft performance calculations, ii) aircraft weight and balance calculations, iii) aircraft fuel calculation and iv) crew duty times.

It is essential that the calculations to determine these results follow the official aircraft documentation and deliver accurate results. The corresponding software is named "Operational Software".

Regarding i), performances of an aircraft can be influenced by several settings made by the pilot (flaps, thrust, etc), environmental variables (wind, temperature, runway length, etc), and properties of the aircraft (non-functional subsystems, weight, etc). All these variables combined can determine the maximum take-off weight, the speeds to be met and the optimum thrust setting. Performances' inputs comprise data such as: airport (e.g. elevation, obstacles, identification, runway conditions, runway direction, length, etc), weather data (wind, air temperature, air pressure, METAR), Aircraft weight, power, flaps bleeds information, Minimum Equipment List conditions. Performances' outputs comprise V1, V2, VR, thrust and some reminders.

Regarding ii), "Weight and balance" of a fixed winged aircraft is defined by an *envelope* on two axis (weight and balance as defined by the longitudinal position of the center of gravity). For rotary aircraft the center of gravity is split between lateral and longitudinal position. Determining whether the calculations are correct for the entire envelope is often not done but instead performed by only validating the "corner points" and assuming all other points are valid. Weight & Balance's data inputs can comprise: inputs linked to the aircraft weight policy (aircraft configuration, potential correction of Dry Operating Index and Weight, Maximum take-off weight, Zero fuel weight, etc), passengers and bags weight and configuration passengers & cargo distribution in the aircraft; use of operational aids such a slings and hoists, fuel weights, etc. Weight & Balance's outputs can comprise: aircraft and fuel weights, aircraft balance (center of gravity information), presentation of the envelops and location of the center of gravity information (e.g. zero fuel CG, take-off and landing CG) as compared with the envelops.

Regarding iii), "fuel" calculations for aircraft, especially when operating long haul and/or over dangerous areas, are essential in making commercial aviation a safe and cost efficient commercial activity. Data can comprise: Time of [day/season], Citypair, runways, load (pax, cargo), closed area's, winds en route, turbulence information, etc.

Regarding iv), "duty times" designates is the full period that a pilot is on duty, from the moment they report to duty to the moment they are free of all duties. The duty time is made up of the 'flight duty period' and any subsequent duty time before the off-duty period. The 'flight time' refers to moments of the duty time when the aircraft first moves under its own power for the purpose of taking-off, until the moment at which it comes to rest after landing, whereas the 'flight duty period' is the part of the duty period that includes both flight time, pre- and post-flight duties, and positioning or other duties at the beginning of the duty period. Airlines need to be able to calculate duty time, flight time and flight duty period for their pilots, in order to comply with limits and requirements, and to determine off-duty periods and cumulative duty periods. Data associated with duty times can comprise: user data, duty history, ttime of [day/season], city pair, accumulated duty information over time, etc. Duty time calculation rules can differ between airlines (depending on the local CAA and the negotiations with the unions).

Depending on embodiments of the invention, various objects and parameters can be manipulated. Definitions are now provided.

In some embodiments, a "model" describes the boundaries of "normal" operations. It can be named the "Operational Envelope" (acronym OE). In some embodiments, the envelope can two dimensional for W&B, but also multi-dimensional in case of performance calculations. Operating outside of the envelope is never possible, but even within the envelope combinations of parameter could make operations unsafe or prohibited. The visualization operational envelope also can help in creating human interpretable warnings.

In some embodiments, an "Operational Tool" (acronym OT) can be used by pilots or qualified personnel to review, correct and confirm the calculated data. In an interactive tool all or parts of and operational envelope can be used (for example with an EFB).

In some embodiments, an "Operational Software" (acronym OS) can produce the data used by the pilots for their operations (fuel calculation, performances, etc). All or parts of the Operational Software can be included in the Operational Tool.

In some embodiments, data collected using operational tools is validated by humans and qualified as good or *also erroneous*; it can be stored in a "Cloud Data Model" (CDM). This corresponds to (initial) "big data".

In some embodiments, a "Deep Learning (Artificial Intelligence) Processing Engine" (acronym DLPE) can analyze the CDM or big data and establish relationships between variables, that is a "multi-dimensional model space". Deep learning is just one of the techniques which can be used (more generally: machine learning can be used). Such a model for example enables to determine if values entered by a pilot are within the expected boundaries (the "safe" boundaries).

Aviation or avionics "safety" designates the state of an avionics system (or organization) in which risks associated with aviation activities, related to, or in direct support of the operation of aircraft, are reduced and controlled to an acceptable level. "Safety" encompasses the theory, practice, investigation, and categorization of flight failures, and the prevention of such failures through regulation, education, and training.

In some embodiments, a "Sampling and Validation Engine" (acronym SVE) can generate the data scope (e.g. test fixture) needed to validate the results produced by the Operational Software against the Deep Learning Processing Engine. The SVE will also create a report for quality assurance purposes.

In some embodiments, a "Validation Model" can synthesize information or the knowledge extracted from the DLPE for a specific subset of the data (e.g. aircraft type)
In some embodiments, an Operational Software Engine (acronym OVE) can be used by an advanced Operational Tool to provide feedback to the pilot or qualified personnel about the inputs and calculated outputs.

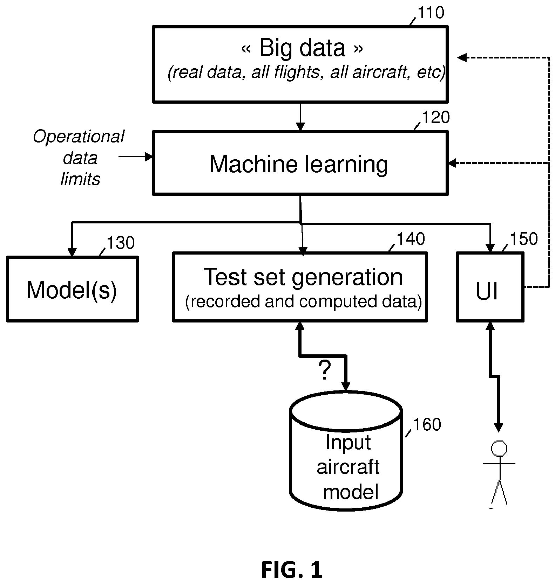

Figure 1 illustrates the architecture of an embodiment of the invention.

According to the invention, machine learning techniques 120 can be performed on Big Data 110 related to aircraft data. As a result, one or more aircraft models 130 can be extracted, one or more test sets 140 can be generated (e.g. by combinatorial generation) and human interaction can be enabled via specific User Interface 150.

The expression "Big data" 110 is associated with a number of technical concepts, comprising *volume* (large collections, even if redundant), *variety* (stemming from numerous sources), *velocity* (constant updating of data in dynamic environments), *veracity* (i.e., how much noise is in the data, embedding of weak signals that may not be seen otherwise) and *value* (insights have technical or business uses).

Various types of machine learning 120 are possible. Machine learning is a field of computer science that uses statistical techniques to give computer systems the ability to "learn" (e.g., progressively improve performance on a specific task) with data, *without being explicitly programmed.*

Machine learning, which has been called "the part of A.I. that works", is helpful for pattern detection and recognition. Advantageously, it's sometimes easier to collect the data (e.g. Go game data) than to explicitly write the program. In addition, neural networks can be revisited and retrained on new data; it doesn't need to be rewritten. Machine learning can advantageously be performed on "big data", i.e. using as much data as possible (stability, convergence, weak signals). New data is continuously added and training can be reiterated. Machine learning tasks are typically classified into two broad categories, depending on whether there is a learning "signal" or "feedback" available to a learning system:

"Supervised learning" designates a situation wherein the computer is presented with example inputs and their desired outputs, given by a "teacher", and the goal is to learn a general rule that maps inputs to outputs. As special cases, the input signal can be only partially available, or restricted to special feedback.

"Semi-supervised learning" designates a situation wherein the computer is given only an incomplete training signal: training set with some (often many) of the target outputs missing.

"Active learning" designates a situation wherein the computer can only obtain training labels for a limited set of instances (based on a budget), and also has to optimize its choice of objects to acquire labels for. When used interactively, these can be presented to the user for labeling.

"Reinforcement learning" designates a situation wherein training data (for example in form of rewards and punishments) is given only as a feedback to the program's actions in a dynamic environment, such as driving a vehicle or playing a game against an opponent.

"Unsupervised learning" (also called deep learning) designates a situation wherein no labels are given to the learning algorithm, leaving it on its own to find structure in its input. Unsupervised learning can be a goal in itself (discovering hidden patterns in data) or a means towards an end (feature learning). Deep learning can be used advantageously in embodiments of the invention.

Depending on embodiments, the human contribution in machine learning steps can vary. In some embodiments machine learning is applied to machine learning ("automated machine learning"). The entire process can be automated indeed, including using multiple models and comparing results. In most cases, humans are involved in machine learning (""Human in the loop"). Data engineers or developers are responsible for maintaining the data pipeline: ingesting data, cleaning data, feature engineering, and model discovery (roles of a teacher, a curator of training data, and an analyst of results). In "deep learning" for example, data scientists seek for the right neural network architectures and parameters.

A model 130 comprises one or more objects, e.g. data envelopes or data points.

The User Interface 140 can query, modify or otherwise influence machine learning 120 and/or data collection 110.

In one embodiment, there is disclosed a method for handling aircraft data, comprising the steps of: receiving an input aircraft model and/or operational data; comparing said input aircraft model and/or operations data with reference data previously obtained by machine learning performed on large collections of data of recorded flights, wherein said reference data defines safe boundaries for one or more aircraft models and/or operations data.

Proprietary aircraft models are often kept secret. When available, such models may not be sufficient. Determining aircraft models from commercial flight and real measures accumulated over time is advantageous. "Operational" (op operations' data) designates data which has been entered and thus validated by pilots in different aircraft configurations (e.g. V1 and V2 for one specific configuration). An aircraft model can comprise XML files and various data types. Operations data can comprise recorded data of commercial flights.

A model can comprise a multi-dimensional envelope specifying one or more zones of safe operations. In mathematical systems theory, a multidimensional system comprises several independent variables.

Large collections of data are *on* or *of* or *associated to* recorded (commercial, real) flights.

In one embodiment, the method further comprises the step of validating said input aircraft model and/or operational data if the step of comparing does not reveal impossible values or other conflicts in view of safe boundaries.

In one embodiment, the method further comprises the step of generating a superset of data, by performing one or more of the steps comprising adding, deleting, merging, splitting, or combining data of said large collections of data.

It advantageously can be kept traces of the origins of data. Real validated dataset A for an Airbus A320 can be merged into real validated dataset B for an Airbus A330, thus creating artificial but potentially useful data. The superset of data can thus comprise an amount of data which can be way superior to the initial data having being collected.

In one embodiment, the superset of data is obtained by one or more operations performed on the large collection of data of recorded flights, said operations comprising one or more of extrapolation, interpolation, ponderation, regression, approximation or simulation.

In one embodiment, the method further comprises the step of generating a report when *comparing* an input aircraft model to a reference model, said reference model being obtained by machine learning performed on said superset of data.

In particular, the report can comprise one or more databases. In some embodiments, the report can highlight errors, conflicts, outliers or otherwise abnormal data, in the input model and/or operations data, for example in view of safe boundaries obtained by machine learning.

The validation step can consist in validating the correct working of the model and/or operational data for the operational scenario for a plurality of flight (finite) contexts. Such automation of tests (e.g. batch validation) can provide a human expert with a report in order to later certify (administrative task) the "release" of said tool or tool component (e.g. engine).

In one embodiment, machine learning comprises deep learning, wherein pre-training is unsupervised.

In one embodiment, machine learning uses one or more techniques of the list comprising Random Forest, Support Vector Machines, Adaptive Boosting, Back-Propagation Artificial Neural Network and/or Convolutional Neural Network.

In one embodiment, large collections of data can be characterized by properties such as volume, variety, velocity and veracity.

In one embodiment, large collection of data comprises aircraft or flight data stemming for a plurality of airlines about a plurality of aircraft, engines, flight contexts, aircraft configurations and meteorological data. The latter enumeration is not exhaustive but indicates critical data to be taken into account.

In one embodiment, the step of comparing received model and/or operations data with reference data comprises a step of semi-supervised anomaly detection.

In data mining, anomaly detection (also outlier detection) is the identification of rare items, events or observations which raise suspicions by differing significantly from the majority of the data (e.g. bank fraud, structural defect, problems or errors in a text). Anomalies are also referred to as *outliers, novelties, noise, deviations and exceptions.* "Semi-supervised" anomaly detection techniques construct a model representing normal behavior from a given normal training data set, and then testing the likelihood of a test instance to be generated by the learnt model. The term "semi" means that human users are involved at some step of the process, be they "flight operational" (pilot) or part of "software operational" (developers, in charge of design software)

In one embodiment, the step of semi-supervised anomaly detection comprises using one or more of the methods or techniques comprising statistical techniques, density-based techniques such as k-nearest neighbor, local outlier factor or isolation forests, subspace and correlation-based outlier detection for high-dimensional data, Support Vector Machines, replicator neural networks, Bayesian Networks, Hidden Markov models, Cluster analysis-based outlier detection, or Fuzzy logic-based outlier detection.

In one embodiment, the method further comprises the step of displaying one or more determined comparisons or anomalies, and triggering one or more visual and/or vibratile and/or audio alerts depending on the application of predefined thresholds on said one or more comparisons or anomalies.

If the difference is within safe boundaries, no alert is triggered. If outside safe boundaries (inferior to low bound, superior to upper bound), then an alert can be triggered. If the situation is borderline (e.g. plus or minus a given tolerance to the envelope frontiers), then an invitation to perform verifications can be triggered. Both inputs and outputs can be validated.

In one embodiment, data comprise aircraft performance calculations and/or aircraft weight and balance calculations and/or aircraft fuel calculation and/or crew duty times.

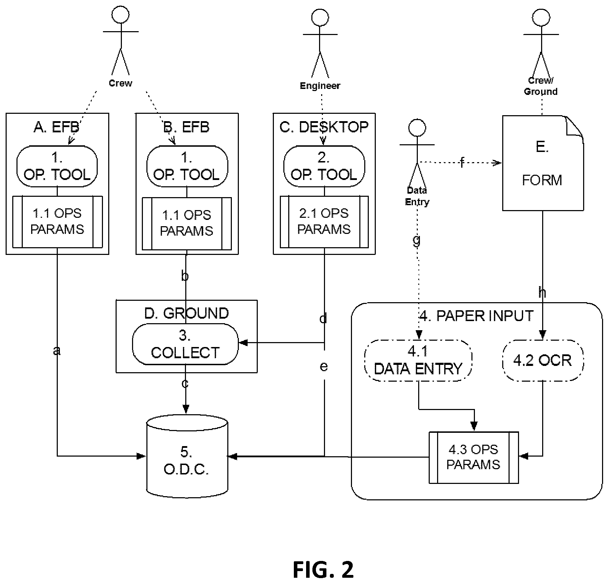

Figure 2 illustrates an example of a data collection step.

One principle of the invention is to *get as much data as possible.*

In order to get "big data" 110, in the field of avionics, data can be gathered from different airlines, from given different devices, of different natures (e.g. EFB, desktop, ground servers, sensors), be it public data (e.g. meteorological data, even passengers' devices) or data stemming from non-electronic sources (e.g. data obtained by Optical Character Recognition of papers), etc.

Different incentives to facilitate data collection can be used. Data silos (e.g. of an airline company) can be provided for free. In some embodiments, data also can be provided against access to data, or to its analytics results (the more data you provide the more insights you gain). In some embodiments, business models can translate into technical features (e.g. use of blockchains, particular schemes of exchanges of data such as use of tokens, access rights management, etc). The granularity of data access also can be configured (from one data field to entire models).

In some embodiments, data is pushed (for example via APIs, i.e. passively). In some embodiments, data can be pulled (for example searched or retrieved actively or with intention). In some embodiments data be both pushed and pulled.

As a result of the data collection step, a database 5 is built. This database noticeably is *grounded in reality*: it relies on real data, facts and measures. The database 5 corresponds to real flight contexts or situations.

In more details, FIG. 2 shows data collection examples, performed by a plurality of EFBs (A, B) or Desktops Portal (C) used by back-office personal to prepare/follow flights and perform post flight evaluation. Operational tools (OP. TOOL) offer services such as Performances Calculator, Duty Time calculator, W&B, etc. OPS PARAMS (1.1, 2.2, 4.3) are operational parameters (input, decision points and outputs). Decision points are part of the OPS procedure and not documented. Data is for example collected by an (aggregating) ground server (D), along with Optical Character Recognition performed on paper forms filled out by qualified personal as main or back-up scenario (E). Collected data is stored in one or more databases forming the "big data" silo (Operational Data Cloud 5)

Adding data points from the Operational Tool (Op. TOOL) into Operational Data Cloud 5 can require machine learning algorithm to be updated as new sample points can provide better and new insights. The mentioned system is therefore evolving and self learning as the data set grows. Data collection could be automated or based on manual data processing.

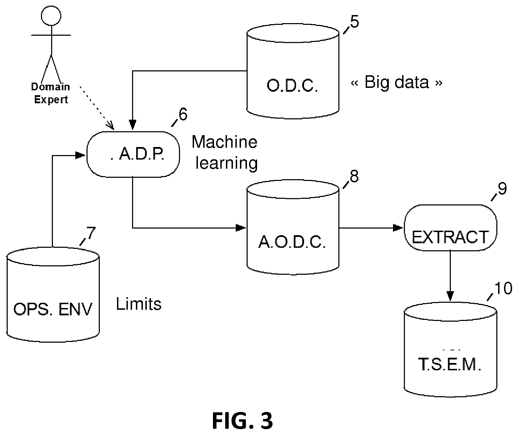

Figure 3 illustrates examples of data processing steps according to the invention.

The database 5 is processed by machine learning techniques (120, 6), including but not limited to deep learning techniques. One purpose of machine-learning is to detect patterns which otherwise hardly can be detected by human experts. In order to fine-tune these machine learning steps, human expertise can be use (via coding in the form of heuristics, parameters, rules of thumbs, use of off-the-shelf libraries, etc or via interactions via dedicated User Interfaces). As an example, a user can merge data in a spreadsheet of A320 and A330 because he knows their similarities for a given task. Users can rule or guide or otherwise shape data, by "forcing" relationships in raw data, while machines can detect weak signals or patterns.

In order to be parameterized, the database 5 can use a set of limits or constraints stemming from operational data 7. Operational data 7 can comprise for example performance data when a given model of aircraft is empty or full. Limits and other constraints are indeed useful to limit the search space (space of possible). It can be advantageous to reduce or limit the dimensionality of a neural network using (e.g. via string pre-processing or quantization) for implementation on a mobile or embedded device (e.g. EFB). As a result of the application of machine learning techniques (120, 6), a database 8 is obtained, hereinafter referred to as an "augmented" database i.e. a database grounded in reality, which may have been reduced in dimensionality based on operational data, which can be more structured than the initial data silo 110, and possibly enriched or flagged by machine learning. Typically, the data base 8 comprises data about a maximal number of types of aircraft, numerous engines, many different operational conditions, etc.

Out of the augmented database 8, one or more models (130, 10) can be extracted.

In more details, FIG. 3 shows how the "big data" database 5 O.D.C is "augmented" or "enriched" into database 8 A.O.D.C, by the application of machine learning techniques 6. In order to teach these latter algorithms and determine relationships between variables, known data processing constraints or limits 7 can be used. Advantageously, known limits and constraints (for example temperatures below -50°C are not possible) can help reducing the computational complexity. In some optional embodiments, one or more Target Specific Extraction Model(s) (T.S.E.M) 10 are extracted 9 out of the database 8 A.O.D.C. The term "target" designates for example a user role or an aircraft type. Corresponding databases can use XML and JSON.

Figure 4 illustrates one aspect of the invention, namely an interaction enabled with a graphical user interface.

In one embodiment, an end-user can validate (sequentially) *both* its inputs and outputs against the learnt models (both In/Out can be constrained). The drawing shows that the input provided by the user is first tested against acceptable ranges, learned by one or more of the models according to the invention. In one embodiment the input submitted by a user is verified against predefined acceptable ranges. If acceptable, then one or more outputs are determined according to the model. Then outputs are checked again against acceptable ranges, learned by the models according to the invention.

In one embodiment the verification of the inputs which can be conditional to the computation of the output can be context dependent. For example in a given situation (landing, take off) specific values can be expected, within predefined ranges. In any way, an input not fitting against predefined ranges shall be rejected. The output which is calculated based on the input also can be checked.

Three situations can occur: a) the output can be within acceptable ranges: b) the output can be borderline (e.g. edges or near envelopes' limits) in which case an error and/or a warning can be displayed; c) the output may not fit with the predicted models, in which case the pilot has change his input(s) because the output is not acceptable.

In an embodiment, received data designates data entered by the pilot, directly or indirectly (via an EFB for example). On object of the invention is assess said data and to return feedback about this input data, the feedback being obtained from machine learning. In one embodiment, input data can be validated or authorized or confirmed. In an embodiment, input data can be forbidden, or otherwise rejected. In one embodiment, input data is modulated (e.g. some suggestions can be made in order to comply with past values or learnt models. Suggestions for example can be recommended values along tolerances (upper and lower bounds), etc.

The form of data can vary. Data generally comprises a set of values (such as configuration parameters), but it can be a formatted object like an XML file, a set of voice commands, multiple visual selections, etc.

Regarding the substance, data is generally "Operational data" which data is operative for an aircraft (e.g. V1, V2, fuel quantity, gravity center geometrical position, etc). Data can be directly operational ("as is") or can be operative once operations are performed (conversion, formatting, etc). The term "operational" emphasizes that "important" data, not to say critical data, is hereby handled.

In more details, the pilot or the crew enter data via one or more EFBs A, via OP TOOLs 1. TOOL MGMT designates a Management Component updating databases for the operational tool (could be integrated). The TOOL MGMT 11 designates a Management Component which can update databases for the operational tools (possibly integrated). CALC CTX 13 computes decision points and outputs from inputs. OPS TOOL DB 12 corresponds to Operation Databases used by the Operation Tool, e.g. SCAP & Obstacle, etc.

Figure 5 shows another aspect of the invention, namely testing an aircraft model against models learnt from large collection of data, grounded in reality and limited by operational data limits and constraints.

From the augmented database 8, there is *generated* a test set which is a superset of the database 8 built in a combinatorial way. The resulting test set 15 ("superset") is a much bigger database than database 8, which contains both *recorded* data and *computed* data (interpolated, extrapolated, assimilation, merge, fusion, similarity, split, etc)

Both man and machine can intervene to create the database 15.

In one embodiment, the origin of data can be tagged (in other words, data can be flagged to not forget the origin of the data, assuming that real data is preferred over artificially created data).

In one embodiment, the method according to the invention can further comprise the step of submitting an *aircraft input model* along *operational contexts* (in the form of databases), hereinafter referred to as "test challenge". Aircraft input model can comprises one or more scalars, matrixes, tensors, etc; The operational contexts can be records of real flights, that is how the considered aircraft behaves in reality.

The test challenged is compared to the generated superset 15.

As a result, the submitted models can be validated, has a whole or in part i.e. according to different degrees. Alerts or highlights can be triggered, to draw attention of the users submitting the test challenge.

Such embodiments are advantageous compared to existing practices. Nowadays an aircraft model is checked manually, with a limited number of test points. Such a process is slow, costly and not exhaustive. According to embodiments of the invention, entire databases can be submitted, not only test points. The coverage of tests is then significantly improved, not even talking about speed and accuracy. Attention of testers can be drawn to certain aspects of their model.

Advantageously models which are being successfully verified according to the present method can now be used with more confidence. By design, the submitted model is challenged against a wide variety of aircraft contexts.

In more details, in one embodiment, an aircraft model and/or associated operational data are validated against a generated test set 14. This for example can apply to various data entries, and in particular for: i) aircraft performance calculations, ii) aircraft weight and balance calculations, iii) aircraft fuel calculation and iv) crew duty times.

In more details, from the database A.O.D.C 8, a test set 14 is generated. This test set take into account OPS. ENV 7, i.e. operational constraints and limits. A domain expert then can "test" in order to validate it, a given model and/or operational data. Models can be bought, built from different providers, can be theoretic, etc. Operational data also can be bought, licensed, built from scratch, etc. In some embodiment, a given test set is associated to a certain context, model and operational data (i.e. envelope). Man and/or machine can generate the test set 14. For example, a domain expert 510 can fine tune the generation of the test set (which also can be built automatically by the application of logical or combinatorial rules).

An engineer 520 can run a validation test 15 by providing a model and/or operational data. In more details, in order to perform a validation, quantization is possible. For example, the validation step can comprise the steps of creating a set of values *in, out and on* the envelope for as much parameters as possible, then push these values into the Operational Software and send the results into the machine learning engine for validation.

In some embodiments, the validation test can indicate proximity to the operational envelope (safe boundaries), or otherwise provide feedback to the submitter, such as multi-point visualizations or recommendations (e.g. impossible values, recommended values, borderline values, acceptable values, etc). As some data values can be interdependent; various user interfaces options are possible (e.g. tabs, 3D graphics, providing exploration tools, etc). The validation process can be implemented on-line but also off-line. Test results 17 can be obtained, which can be used to generate a report 18, and in fine a validation report 16 providing comparisons and various metrics for different discrete sets of data i.e. different configurations or scenarios (e.g. context specific validation report to be used by release management with different databases, engines, tools, etc). This report in particular can be used by/for the authorities to get approval for the use of the model and/or operational data (Operational Software, Operational Tool).

Hardware implementations are now discussed.

Embodiments of the invention can use one or more Electronic Flight Bags (acronym EFB), which are non-avionics system (i.e. both HW and OS do not comply with usual avionics requirements). An EFB is often a general-purpose computer (computer tablet) and running software is not designed following a Design Assurance method.

In some embodiments, critical performance computations can be performed on an EFB, with organizational safety added mechanisms such as "hybrid check" (e.g. one crew member uses the EFB, a second crew member uses paper documents to establish the same computation, and results are compared. This comparison is considered as robust, yet reduces the interest of using an EFB) or "dual check" (e.g. both crew members perform the same computations with their own EFBs and results are compared; such a comparison is not robust, as both EFB are identical and potentially subject to the same errors, but at least this method avoids tablet failures effects).

In one aspect of the invention, the results of the computations handled according to embodiments of the invention are compared with previous computation results having being memorized (historization) and/or with recorded data of commercial flights. Ingested data is by construction data as entered by pilots, for example at take-off. In some embodiment, databases are to verify the consistency and the validity of input parameters. Verifications in particular are dynamic. Advantageously, EFBs can be used.

The figure 6 shows (parts of) an example of a configuration file associated with an aircraft model. This file is in XML format and defines the operational model for the Weight & Balance of an aircraft. This contains information such as maximum weights but also describes the envelopes which define the relation between center of gravity and mass or tables defining the relation between fuel (and fuel limits) and center of gravity. The model and configuration file can in particular comprise a plurality of envelopes such as the envelope 610.

The figure 7 shows a *schematic* example of an envelope. An envelope comprises data points and relations (e.g. lines) between these data points, defining the influence of a specific parameter or set of parameters on properties of the aircraft in some given conditions. Specifically, FIG. 7 is a schematic example in the context or conditions of Weight & Balance. FIG. 7 shows two operation variations or envelopes (710 TO for "Take-Off "and 720 ZF for Zero Fuel) in function of weight (Y-axis) and the center of gravity. The center of gravity is calculated based on the distribution of the load in the aircraft (e.g. passengers and cargo).

Other graphs, envelopes or data can define relations between parameters of an aircraft model. Other examples (not shown) for example relate to the correlation between temperature, altitude and maximum weight for landing, etc. In another example, an envelope can define the relation between "Takeoff run" required (distance on the runway) and the wind and slope. This output can then serve again in a different model defining the relation between the corrected distance and the maximum weight. The plurality of envelopes, graphs and data constitute an aircraft model.

The disclosed methods can take form of an entirely hardware embodiment (e.g. FPGA), an entirely software embodiment or an embodiment containing both hardware and software elements. Software embodiments include but are not limited to firmware, resident software, microcode, etc. The invention also can take the form of a computer program product accessible from a computer-usable or computer-readable medium providing program code for use by or in connection with a computer or any instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, and/or semiconductor system (or apparatus or device) or a propagation medium or the like.

There is disclosed a computer program comprising instructions for carrying out one or more of the steps of the method when said computer program is executed on a computer device.

There is disclosed a system comprising deep neural networks and/or deep belief networks and/or recurrent neural networks adapted to carry out one or more of the steps of the method. Software Neural network simulators can be used (software applications simulating the behavior of artificial or biological neural networks). Artificial or biological neural networks can be used (physical NN, e.g. ADALINE, Physical Neural Network, Phase change neural network, Memristive neural network). Quantum neural networks (QNNs) may be used. QNNs are neural network models which are based on the principles of quantum mechanics; quantum parallelism or the effects of interference and entanglement can be used as resources for big data applications.

The figures and description are provided for illustration purposes only and the above described embodiments may be combined when appropriate.

## Claims

1. A method for handling aircraft data, comprising the steps of:
- receiving an input aircraft model and/or operational data;
- comparing said input aircraft model and/or operations data with reference data previously obtained by machine learning performed on large collections of data of recorded flights, wherein said reference data defines safe boundaries for one or more aircraft models and/or operations data.

2. The method of claim 1, further comprising the step of generating a superset of data, by performing one or more of the steps comprising adding, deleting, merging, splitting, or combining data of said large collections of data.

3. The method of claim 2, wherein the superset of data is obtained by one or more operations performed on the large collection of data of recorded flights, said operations comprising one or more of extrapolation, interpolation, ponderation, regression, approximation or simulation.

4. The method of claim 2 or 3, further comprising the step of generating a report when *comparing* an input aircraft model to a reference model, said reference model being obtained by machine learning performed on said superset of data.

5. The method claim 1, wherein machine learning comprises deep learning, wherein pre-training is unsupervised.

6. The method claim 1, wherein machine learning uses one or more techniques of the list comprising Random Forest, Support Vector Machines, Adaptive Boosting, Back-Propagation Artificial Neural Network and/or Convolutional Neural Network.

7. The method of claim 1, wherein large collections of data can be **characterized by** properties such as volume, variety, velocity and veracity.

8. The method of claim 1, wherein large collection of data comprises aircraft or flight data stemming for a plurality of airlines about a plurality of aircraft, engines, flight contexts, aircraft configurations and meteorological data.

9. The method of any preceding claim 1, wherein the step of comparing received model and/or operations data with reference data comprises a step of semi-supervised anomaly detection.

10. The method of claim 9, wherein the step of semi-supervised anomaly detection comprises using one or more of the methods or techniques comprising statistical techniques, density-based techniques such as k-nearest neighbor, local outlier factor or isolation forests, subspace and correlation-based outlier detection for high-dimensional data, Support Vector Machines, replicator neural networks, Bayesian Networks, Hidden Markov models, Cluster analysis-based outlier detection, or Fuzzy logic-based outlier detection.

11. The method of claim 7, further comprising the step of displaying one or more determined comparisons or anomalies, and triggering one or more visual and/or vibratile and/or audio alerts depending on the application of predefined thresholds on said one or more comparisons or anomalies.

12. The method of any preceding claim, wherein data comprise aircraft performance calculations and/or aircraft weight and balance calculations and/or aircraft fuel calculation and/or crew duty times.

13. A computer program comprising instructions for carrying out the steps of the method according to any one of claim 1 to 12 when said computer program is executed on a computer device.

14. A system comprising deep neural networks and/or deep belief networks and/or recurrent neural networks adapted to carry out the steps of the method according to any one of claims 1 to 12.
